# EUROPÄISCHE PATENTSCHRIFT

(11) **EP 0 496 121 B1**
(45) Veröffentlichungstag und Bekanntmachung des Hinweises auf die Patenterteilung: **09.10.1996**
(21) Anmeldenummer: 91122352.7
(22) Anmeldetag: 28.12.1991
(51) Int. Cl.: C08L 27/06, C08F 285/00

(54) **Schlagfeste Polyvinylhalogenidformmasse mit hoher Transparenz**
Impact-resistant moulding with high transparency
Masse de moulage d'halogénure de polyvinyle résistant au choc et de haute transparence

(30) Priorität: 24.01.1991 DE 4101969
(43) Veröffentlichungstag der Anmeldung: 29.07.1992
(73) Patentinhaber: BASF Aktiengesellschaft, 67063 Ludwigshafen (DE)
(72) Erfinder: Goertz, Hans-Helmut, Dr., W-6713 Freinsheim (DE); Lynch, John, Dr., W-6529 Monsheim (DE); Oschmann, Werner, Dr., W-6700 Ludwigshafen (DE)

(56) Entgegenhaltungen:
- EP-A- 0 050 848
- EP-A- 0 082 717
- DE-A- 3 539 414
- US-A- 3 644 249
- US-A- 3 886 235

## Beschreibung

Die Erfindung betrifft eine Polyvinylhalogenidformmasse, enthaltend
A) 20-98 Gew.-% eines Polyvinylhalogenids und
B) 2-80 Gew.-% eines Emulsionscopolymerisats, erhältlich durch
   b₁) Emulsionspolymerisation von 1-20 Gew.-% eines Monomerengemisches aus
      10-99,5 Gew.-% mindestens eines Cₗ-C,₈-Aikyiacrylats
      0,5-90 Gew.-% mindestens eines konjugierten Diens
      0-10 Gew.-% mindestens eines zwei- oder mehrfach ethylenisch ungesättigten Monomeren mit mindestens einer nicht konjugierten Doppelbindung und
      0-10 Gew.-% mindestens eines weiteren Monomeren,
   b₂) anschließende Emulsionspolymerisation in Gegenwart des nach Stufe b₁) erhaltenen Emulsionspolymerisats von
      25-65 Gew.-% eines Monomerengemisches aus
         80-99,9 Gew.-% mindestens einer vinylaromatischen Verbindung,
         0,1-10,0 Gew.-% mindestens eines konjugierten Diens oder mindestens eines zwei- oder mehrfach ethylenisch ungesättigten Monomeren mit mindestens einer nicht konjugierten Doppelbindung oder deren Mischungen und
         0-10 Gew.-% mindestens eines weiteren Monomeren und
   b₃) anschließende Emulsionspolymerisation in Gegenwart des nach Stufe b₂) erhaltenen Emulsionspolymerisats von 15-74 Gew.-% eines Monomerengemischs aus
      80-99,9 Gew.-% mindestens eines C₁-C₁₈-Alkylacrylats
      0,1-10,0 Gew.-% mindestens eines konjugierten Diens oder mindestens eines zwei- oder mehrfach ethylenisch ungesättigten Monomeren mit mindestens einer nichtkonjugierten Doppelbindung oder deren Mischungen und
      0-10 Gew.-% mindestens eines weiteren Monomeren,

wobei sich die Gewichtsprozente der in den Stufen b₁) bis b₃) eingesetzten Monomerengemischeauf das Emulsionscopolymerisat B) beziehen, sich auf 100 Gew.-% addieren, und der Gesamtanteil an Monomeren mit konjugierten Doppelbindungen im Emulsionscopolymerisat kleiner als 10 Gew.-% ist.

Die Schlagzähigkeit von Polyvinylchlorid kann bekannterweise durch Zusatz von mehrstufig aufgebauten Emulsionscopolymerisaten deutlich erhöht werden.

Bei der Herstellung der Polyvinylchloridformmassen können die Emulsionscopolymerisate dem bereits auspolymerisierten Polyvinylchlorid zugemischt werden. Besonders vorteilhaft, insbesondere im Hinblick auf eine gute Anbindung des Emulsionscopolymerisates an die Polyvinylchloridmatrix ist es, die Monomeren der Polyvinylchloridmatrix in Gegenwart des Emulsionscopolymerisats zu polymerisieren.

Als Kautschuk wird in den Emulsionscopolymerisaten aus Gründen der Witterungsstabilität im allgemeinen ein Acrylatkautschuk eingesetzt.

Nach der DE-A-21 62 615 werden Polyvinylchloridformmassen durch Suspensionspolymerisation von Vinylchlorid in Gegenwart eines Acrylatkautschuks erhalten. Die Formmassen sind jedoch wenig transparent.

Aus der DE-B-20 13 020 sind nach einem analogen Verfahren hergestellte Polyvinylchloridformmassen bekannt, welche ein mehrstufiges Emulsionscopolymerisat mit einem Acrylatkautschuk als Kern und vernetztem Polystyrol in der Pfropfhülle enthalten. Der Anteil des Acrylatkautschuks beträgt mindestens 25 Gew.-%.

Das Emulsionspolymerisat der DE-A 2 222 867 besteht aus einem Kern aus vernetztem Polystyrol und einem Acrylatkautschuk als Hülle. In Gegenwart des Emulsionscopolymerisats wird Vinylchlorid in Emulsion oder Suspension polymerisiert.

Nach der DE-A-3 539 414 werden Polyvinylchloridformmassen durch Suspensionspolymerisation von Vinylchlorid in Gegenwart eines dreistufigen Emulsionscopolymerisats aus 0,01 bis 5 Gew.-% einer 1. Stufe aus vernetztem Polyalkyl(meth)acrylat, 20 bis 70 Gew.-% einer 2. Stufe aus vernetztem Polystyrol und 25 bis 79,99 Gew-% einer 3. Stufe aus vernetztem Polyalkylacrylat erhalten.

Die beschriebenen Polyvinylchloridformmassen weisen noch Mängel hinsichtlich der Transparenz oder Schlagzähigkeit auf.

Aufgabe der vorliegenden Erfindung war es, diesen Mängeln abzuhelfen und eine hochtransparente, witterungsstabile Polyvinylchloridformmasse mit sehr guter Schlagzähigkeit zur Verfügung zu stellen.

Demgemäß wurden die eingangs definierten Polyvinylhalogenidformmassen gefunden.

Die erfindungsgemäßen Polyvinylhalogenidformmassen enthalten 20-98 Gew.-% bevorzugt 40-98 Gew.-%, besonders bevorzugt 60-98 Gew.-%, ganz besonders bevorzugt 70-95 Gew.-% des Polyvinylhalogenids A)

Als Polyvinylhalogenid sind vor allem Homo- und Copolymere des Vinylchlorids mit mindestens 80 Gew.-% Vinylchlorideinheiten geeignet.

Als Comonomere des Vinylchlorids kommen insbesondere Vinylester, z.B. Vinylacetat, Vinylpropionat u.a., Vinylether wie Vinylmethylether, Vinylethylether, Vinylisobutylether u.a., C₁-C₁₈-Alkylacrylate wie Butylacrylat oder 2-Ethylhexylacrylat u.a., Dialkylmaleate wie Dibutylmaleat in Betracht.

Besonders bevorzugt sind Vinylchloridhomopolymere (Polyvinylchlorid).

Weiterhin enthalten die erfindungsgemäßen Polyvinylhalogenidformmassen 2-80 Gew.-%, bevorzugt 2-60 Gew.- %, besonders bevorzugt 2-40 Gew.-%, ganz besonders bevorzugt 5-30 Gew.-% des Emulsionscopolymerisats B).

Das Emulsionscopolymerisat B) ist erhältlich durch Emulsionspolymerisation in drei Stufen b₁) bis b₃).

In Stufe b₁) wird bevorzugt ein Monomerengemisch aus
50-99,5, insbesondere 70-99,5 Gew.-% mindestens eines C₁-C₁₈-Alkylacrylats,
0,5-50, insbesondere 0,5-30 Gew.-% mindestens eines konjugierten Diens,
0-5 Gew.-% mindestens eines zwei- oder mehrfach ethylenisch ungesättigten Monomeren mit mindestens einer nicht konjugierten Doppelbindung und
0-5 Gew.-% mindestens eines weiteren Monomeren

eingesetzt.

Der Gewichtsanteil des Monomerengemischs in der Stufe b₁) beträgt 1-20 Gew.-%, bevorzugt 2-15 Gew.-%, besonders bevorzugt 3-10 Gew.-%.

In der Stufe b₂) wird bevorzugt ein Monomerengemisch aus
90-99,9, insbesondere 95-99,5 Gew.-% mindestens einer vinylaromatischen Verbindung,
0,1-10,0, insbesondere 0,5-5 Gew.-% mindestens eines konjugierten Diens oder mindestens eines zwei- oder mehrfach ethylenisch ungesättigten Monomeren mit mindestens einer nicht konjugierten Doppelbindung oder deren Mischungen und
0-5 Gew.-% mindestens eines weiteren Monomeren

eingesetzt.

Der Gewichtsanteil des Monomerengemischs in der Stufe b2) beträgt 25-65 Gew.-%, bevorzugt 30-60, besonders bevorzugt 40-60 Gew.-%.

In der Stufe b₃) wird bevorzugt ein Monomerengemisch aus
90-99,9, insbesondere 95-99,5 Gew.-% mindestens eines C₁-C₁₈-Alkylacrylats,
0,1-10, insbesondere 0,5-5 Gew.-% mindestens eines konjugierten Diens oder mindestens eines zwei- oder mehrfach ethylenisch ungesättigten Monomeren mit mindestens einer nicht konjugierten Doppelbindung oder deren Mischungen und
0-5 Gew.-% mindestens eines weiteren Monomeren

eingesetzt.

Der Gewichtsanteil des Monomerengemischs in der Stufe b3) beträgt 15-74 Gew-%, bevorzugt 15-60, besonders bevorzugt 30-57 Gew.-%.

Der Gesamtgehalt an Monomeren mit konjugierten Doppelbindungen, z.B. konjugierter Diene, im Emulsionscopolymerisat ist kleiner als 10 Gew.-%, bevorzugt kleiner als 6 Gew.-%, besonders bevorzugt kleiner als 4 Gew.-%. Die Witterungsstabilität der Polyvinylhalogenidformmassen wird durch diesen Gehalt an Monomeren mit konjugierten Doppelbindungen im wesentlichen nicht beeinträchtigt.

Bei den C₁C₁₈-Alkylacrylaten sind die C₁-C₁₂, insbesondere die C₁-C₈-Alkylacrylate, wie Methylacrylat, Ethylacrylat, Butylacrylat und 2-Ethylhexylacrylat von Bedeutung.

Als konjugiertes Dien ist Butadien besonders bevorzugt. Daneben kommen beispielsweise Isopren und Chloropren in Betracht.

Als vinylaromatische Monomere eignen sich Styrol sowie dessen ein- oder mehrfach kernsubstituierte Derivate, beispielsweise 4-Methylstyrol, 4-Ethylstyrol, 4-Isopropylstyrol, 3,4-Dimethylstyrol, 4-Chlorstyrol, 4-Bromstyrol, 3,4-Dichlorstyrol sowie a-Methylstyrol.

Besonders bevorzugt ist Styrol.

Als vernetzend wirkende zwei- oder mehrfach ethylenisch ungesättigte Monomere mit mindestens einer nicht konjugierten Doppelbindung sind z.B. Allyl-, Methallyl- und Vinylester von Di-, Tri- oder höheren Carbonsäuren wie z.B. Adipinsäuredivinylester, Phthalsäurediallylester, Maleinsäurediallylester, Fumarsäurediallylester; Allyl-, Methallyl-und Vinylether mehrfunktioneller Alkohole wie Ethylenglykoldivinylether, 1,3-Butandioldivinylether, 1,4-Butandioldivinylether, Pentaerythrittriallylether; Ester der Acryl- oder Methacrylsäure mit mehrwertigen Alkoholen wie Ethylenglykoldi (meth)acrylat, 1,2-Propandioldi(meth)acrylat, 1,3-Propandioldi(meth)acrylat, 1,3-Butandioldi(meth)acrylat, 1,4-Butandioldi(meth)acrylat, Oligo- oder Polyethylenglykoldi(meth)acrylat; Divinylbenzol oder Mischungen der genannten Substanzen geeignet. Bevorzugt sind zweifach ungesättigte Monomere, insbesondere Divinylbenzol sowie 1,3-Butandioldi (meth)acrylat und 1,4-Butandioldi(meth)acrylat.

Weitere Monomere können z.B. C₁-C₁₈-Alkylmethacrylate; (Meth)acrylnitril, Vinylether wie Vinylisobutylether sowie Vinylester wie Vinylacetat oder Vinylpropionat sein. Bevorzugt kommen als weitere Monomere C₁-C₈-Alkylmethacrylate in Betracht. In Stufe b₁) und b₂) kann es sich bei den weiteren Monomeren auch um vinylaromatische Monomere, in der Stufe b₂) kann es sich auch um C₁-C₁₈-Alkylacrylate handeln. Der Einsatz weiterer Monomere ist für eine Verbesserung der Schlagzähigkeit und Transparenz nicht notwendig, kann jedoch in einigen Fällen vorteilhaft sein.

Die Herstellung der Emulsionscopolymerisate B) erfolgt durch Emulsionspolymerisation.

Als Emulgatoren dienen z.B. Natrium-, Kalium- oder Ammoniumsalze von gesättigten oder ungesättigten C₈-C₂₀-Fettsäuren wie Laurinsäure, Stearinsäure, Palmitinsäure, ölsäure u.a., C_{$}-C₂ₒ-Alkylsulfonsäuren, Schwefelsäure-C₈-C₂₀-alkylestern, Alkylbenzolsulfonsäuren, Abiethinsäure und deren Derivaten, Sulfobernsteinsäurealkylestern, alkylierten Diphenylethersulfonsäuren.

Durch die Wahl von Art und Menge des Emulgators kann in bekannter Weise die Teilchengröße der Emulsion eingestellt werden. Sie kann zwischen 50 und 300 nm liegen. Bevorzugt liegt sie im Bereich von 70 bis 200 nm, besonders bevorzugt zwischen 70 und 150 nm.

Als Initiatoren können wasserlösliche thermisch zerfallende Initiatoren oder Redoxsysteme eingesetzt werden. Geeignete thermisch zerfallende Initiatoren sind beispielsweise Natrium-, Kalium-oderAmmoniumpersulfat sowie wasserlösliche Azoverbindungen wie das Natriumsalz der 4,4'-Azo-bis-(4,4'-cyanopentansäure). Als Redoxsysteme kommen beispielsweise Cumolhydroperoxid, Diisopropylbenzolhydroperoxid, lert.-Butylhydroperoxid, tert.-Butylperacetat in Kombination mit Reduktionsmitteln wie Natriumformaldehydsulfoxylat oder Ascorbinsäure in Gegenwart von Eisensalzen in Frage. Auch die genannten Persulfate können in Kombination mit Reduktionsmitteln wie Natrium- oder Kaliummetabisulfit in Redoxsystemen eingesetzt werden.

Die Polymerisationstemperatur liegt im allgemeinen zwischen 10 und 100°C, bevorzugt bei 50 bis 90°C.

Es werden zunächst die Monomeren der Stufe bᵢ) polymerisiert. Danach werden die Monomeren der weiteren Stufen b₂)-b₃) zur wäßrigen Emulsion gegeben. Die Monomeren in den einzelnen Stufen werden zu mehr als 70 Gew.- %, bevorzugt zu mehr als 95 Gew.-%, besonders bevorzugt zu mehr als 99 Gew.-% auspolymerisiert, bevor mit der Zugabe der Monomeren einer weiteren Stufe begonnen wird.

Der Feststoffgehalt der Emulsionen beträgt bevorzugt 30 bis 60 Gew.-%.

Das Emulsionscopolymerisat kann aus der Emulsion bzw. Dispersion in bekannter Weise z.B. durch Fällung oder Sprühtrocknung isoliert und mit dem Polyvinylhalogenid und gegebenenfalls weiteren Zusatzstoffen wie Stabilisatoren, Gleitmitteln, Füllstoffen, Farbstoffen, Pigmenten oder weiteren Modifizierungsmitteln zur Verbesserung der Transparenz, Witterungsbeständigkeit, Wärmeformbeständigkeit, Schlagzähigkeit etc. nach bekannten Verfahren in Extrudern, Knetern oder Walzen gemischt werden.

Die Herstellung der erfindungsgemäßen Polyvinylhalogenidformmasse erfolgt bevorzugt durch Emulsions-, besonders bevorzugt durch Suspensionspolymerisation der Monomeren der Komponenten A) in Gegenwart des Emulsionscopolymerisats B).

Bei den Monomeren der Komponenten A) handelt es sich insbesondere um Vinylchlorid oder Mischungen von Vinylchlorid und anderen Monomeren mit mindestens 80 Gew.-% Vinylchlorid.

Die bei der Herstellung des Emulsionscopolymerisats B) erhaltene Emulsion bzw. Dispersion kann mit Wasser verdünnt und nach Zugabe der Monomeren der Komponenten A) die Emulsions- bzw. Suspensionspolymerisation in bekannter Weise durchgeführt werden.

Die Durchführung der Emulsionspolymerisation kann wie vorangehend beschrieben, gegebenenfalls unter Zugabe weiterer Mengen Emulgator und Initiator erfolgen.

Die erhaltene Emulsion kann nach Entgasung auf üblichem Wege entweder in einem Schritt durch Sprühtrocknung oder aber durch Fällung, anschließende Abtrennung und Trocknung des Feststoffs in ein Pulver überführt werden.

Im Falle der Suspensionspolymerisation können die bei der Herstellung von Polyvinylchlorid üblichen Schutzkolloide eingesetzt werden, wie z.B. teilverseifte Polyvinylalkohole oder Celluloseether wie Methyl-, Methylhydroxyethyl-und Methylhydroxypropylcellulose. Polyvinylalkohole und Celluloseether können auch in Kombination eingesetzt werden.

Als monomerlösliche Initiatoren kommen bei der Suspensionspolymerisation übliche Peroxide, Perester, Percarbonate und Azoverbindungen in Betracht, beispielsweise Dilauroylperoxid, Dibenzoylperoxid, tert.-Butylperneodecanoat, tert.-Butylperpivalat, tert.-Butyl-2-ethylhexanoat, Trimethylpentylperneodecanoat, Diisopropylperoxidicarbonat, Di-n-butylperoxidicarbonat, Di-2-ethylhexylperoxidicarbonat, Dicyclohexylperoxidicarbonat.

Vor, während oder nach der Suspensionspolymerisation kann der pH-Wert durch Zugabe von Puffersalzen wie Natriumphosphat, Natriumpolyphosphat oder Natriumhydrogencarbonat eingestellt werden.

Die Polymerisationstemperatur richtet sich nach dem gewünschten Molekulargewicht bzw K-Wert des Produktes und liegt vorzugsweise zwischen 35 und 80°C, besonders bevorzugt zwischen 45 und 70°C. Die Polymerisation wird zweckmäßigerweise nicht bis zum vollständigen Umsatz des Vinylchlorids geführt, sondern bei einem Umsatz von 60 bis 95 %, bevorzugt 70 bis 85 % abgebrochen. Nach dem Entgasen kann in üblicher Art und Weise der Feststoff durch Filtration oder Zentrifugation vom Suspensionsmedium abgetrennt und dann bei erhöhter Temperatur getrocknet werden.

Das erhaltene Suspensionspolymerisat bzw. Emulsionspolymerisat kann mit den oben beschriebenen Zusatzstoffen gemischt und in bekannter Weise zu Formteilen verarbeitet werden

Die erfindungsgemäßen Polyvinylhalogenidformmassen zeichnen sich durch eine gute Schlagzähigkeit bei sehr guter Transparenz aus. Sie eignen sich daher in besonderem Maße zur Herstellung von Formteilen.

### Beispiele

### Herstellung der Emulsionscopolymerisate

### Emulsionscopolymerisat 1

In einem 50-1-Rührkessel wurden folgende Komponenten gemischt: 10,3 kg vollentsalztes Wasser, 58 g Emulgator (handelsübliches dodecyliertes Biphenylethersulfonat), 13 g Tetranatriumpyrophosphat, 13 g Natriumperoxodisulfat, 497 g n-Butylacrylat und 55 g Butadien. Die Mischung wurde unter Rühren auf 70°C aufgeheizt und 30 min bei dieser Temperatur polymerisiert. Dann wurde innerhalb 2 h ein gerührtes Gemisch, bestehend aus 5,75 kg Wasser, 58 g Emulgator (s.o.), 5,73 kg Styrol, 181 g Butandiol-1,4-diacrylat und 121 g Butadien, gleichmäßig zudosiert 30 min nach Ende dieses Zulaufs wurde bei nach wie vor 70°C eine Lösung von 10 g Tetranatriumpyrophosphat und 10 g Natriumperoxodisulfat in 150 g Wasser zugefügt und dann innerhalb 1 h eine Mischung aus 4,82 kg n-Butylacrylat und 98 g Butadien zudosiert. Die Reaktionsmischung wurde noch 2 1/2 h bei 70°C gerührt und dann gekühlt. Die entstandene Dispersion wies einen Feststoffgehalt von 40,4 Gew.-% auf. Sie hatte einen pH-Wert von 7,4 und eine mittlere Teilchengröße von ca. 90 nm.

Das Emulsionscopolymerisat 1 hatte folgenden Aufbau:
4,8 Gew.-% einer 1. Stufe aus 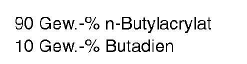
52,4 Gew.-% einer 2. Stufe aus 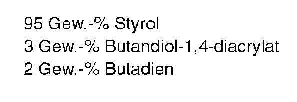
42,8 Gew.-% einer 3. Stufe aus

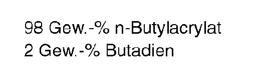

### Emulsionscopolymerisate 2 bis 5 und 1

Analog 1 wurden weitere Emulsionscopolymerisate hergestellt, bei denen lediglich die Mengen an Butylacrylat und Butadien in der 1. Stufe gemäß Tabelle 1 geändert wurden. In I (zum Vergleich) wurde analog zum Produktaufbau in der DE-A 35 39 414 in der ersten Stufe kein Butylacrylat/Butadien-Copolymer, sondern ein mit Butandiol-1,4-diacrylat vernetztes Polybutylacrylat hergestellt.

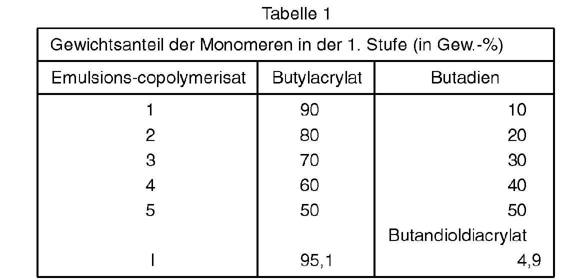

Herstellung der Suspensionspolymerisate durch Suspensionspolymerisation von Vinylchlorid in Gegenwart der Emulsionscopolymerisate 1-5 und 1

In einem 50-1-Rührkessel wurde unter Rühren eine Mischung aus folgenden Komponenten hergestellt: 19,5 kg vollentsalztes Wasser, 3,27 kg der bei der Herstellung des Emulsionscopolymerisats 1 erhaltenen Dispersion, 22,8 g Hydroxypropylmethylcellulose, 8,4 g teilverseifter Polyvinylalkohol (Verseifungsgrad 72 %), 24 g Natriumtripolyphosphat, 1,8 g Di-2-ethylhexylperoxidicarbonat und 1,8 g tert.-Butylperneodecanoat. Zu dieser Mischung wurden 12 kg flüssiges Vinylchlorid zugegeben und bei einer Rührgeschwindigkeit von 300 rpm auf 60°C erwärmt. Nach einer Polymerisationszeit von 5 h wurde das nicht umgesetzte Vinylchlorid durch Entspannen und Nachentgasen im Vakuum entfernt (Umsatz bezogen auf Vinylchlorid ca. 80 %). Die erhaltene Suspension wurde abzentrifugiert und der feuchte Feststoff bei 50°C getrocknet.

Entsprechend wurden die Suspensionspolymerisate von Vinylchlorid in Gegenwart der Emulsionscopolymerisate 2-5 und I hergestellt.

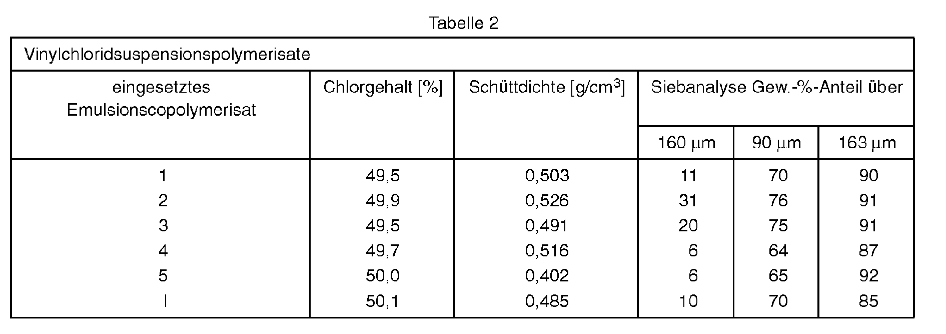

### Herstellung und Prüfung der Probekörper

Eine Mischung von je 100 g des erhaltenen Vinylchloridsuspensionspolymerisates mit 1 g Zinnstabilisator (Di-n-octylzinn-bis-thioglycolsäureiso-octylester), 0,8 Teilen innerem Gleitmittel auf Basis Ölsäureglycerinester und 0,3 Teilen äußerem Gleitmittel auf Basis verzweigter Polyester aus Adipinsäure, ölsäure und Pentaerythrit wurden auf einer beheizbaren Walze 8 min bei 170°C gewalzt. Es wurde ein glattes transparentes Walzfell erhalten, das zur Herstellung der Probekörper diente.

Für die Messung der Schlagzähigkeit wurden bei 180°C Platten aus den Walzfellen gepreßt, aus denen die Normkleinstäbe gearbeitet wurden. Die Messung der Doppel-V-Kerbschlagzähigkeit (Kerbradius 0,5 mm) und der Lochschlagzähigkeit erfolgte nach DIN 53 753, die der Kerbschlagzähigkeit nach DIN 53 453.

Zur Messung der Transparenz wurden 4 mm dicke Platten gepreßt. Durchlicht (D) und Streulicht (Str) wurden mit Hilfe der Ulbricht-Kugel gegen eine Platte aus unmodifiziertem PVC gemessen.

### Tabelle 3

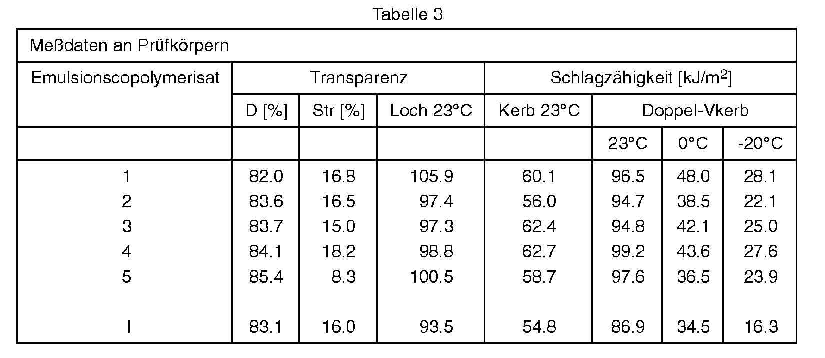

## Patentansprüche (Patentansprüche für folgende(n) Vertragsstaat(en) : BE, FR, NL, DE, GB, IT)

1. Polyvinylhalogenidformmasse, enthaltend
A) 20-98 Gew.-% eines Polyvinylhalogenids und
B) 2-80 Gew.-% eines Emulsionscopolymerisats, erhältlich durch
b₁) Emulsionspolymerisation von 1-20 Gew.-% eines Monomerengemisches aus
10-99,5 Gew.-% mindestens eines C₁-C₁₈-Alkylacrylats,
0,5-90 Gew.-% mindestens eines konjugierten Diens,
0-10 Gew.-% mindestens eines zwei- oder mehrfach ethylenisch ungesättigten Monomeren mit mindestens einer nicht konjugierten Doppelbindung und
0-10 Gew.-% mindestens eines weiteren Monomeren,
b₂) anschließende Emulsionspolymerisation in Gegenwart des nach Stufe b₁) erhaltenen Emulsionspolymerisats von 25-65 Gew.-% eines Monomerengemisches aus
80-99,9 Gew.-% mindestens einer vinylaromatischen Verbindung,
0,1-10,0 Gew.-% mindestens eines konjugierten Diens oder mindestens eines zwei- oder mehrfach ethylenisch ungesättigten Monomeren mit mindestens einer nicht konjugierten Doppelbindung oder deren Mischungen und
0-10 Gew.-% mindestens eines weiteren Monomeren und
b₃) anschließende Emulsionspolymerisation in Gegenwart des nach Stufe b₂) erhaltenen Emulsionspolymerisats von 15-74 Gew.-% eines Monomerengemischs aus
80-99,9 Gew.-% mindestens eines C₁-C₁₈-Alkylacrylats,
0,1-10,0 Gew.-% mindestens eines konjugierten Diens oder mindestens eines zwei- oder mehrfach ethylenisch ungesättigten Monomeren mit mindestens einer nichtkonjugierten Doppelbindung oder deren Mischungen und
0-10 Gew.-% mindestens eines weiteren Monomeren,
wobei sich die Gewichtsprozente der in den Stufen b₁) bis b₃) eingesetzten Monomerengemische auf das Emulsionscopolymerisat B) beziehen, sich auf 100 Gew.-% addieren, und der Gesamtanteil an Monomeren mit konjugierten Doppelbindungen im Emulsionscopolymerisat kleiner als 10 Gew-% ist.

2. Verfahren zur Herstellung einer Polyvinylhalogenidformmasse gemäß Anspruch 1, dadurch gekennzeichnet, daß die Monomeren des Polyvinylhalogenids A) in Gegenwart des Emulsionscopolymerisats B) in Emulsion oder Suspension polymerisiert werden.

3. Polyvinylhalogenidformmassen nach Anspruch 1, enthaltend
A) 60-98 Gew.-% des Polyvinylhalogenids und
B) 2-40 Gew.-% des Emulsionscopolymerisats.

4. Polyvinylhalogenidformmassen nach Anspruch 1, wobei es sich beim Polyvinylhalogenid um Polyvinylchlorid handelt.

5. Formkörper, erhältlich aus Polyvinylhalogenidformmassen gemäß Anspruch 1.

## Patentansprüche (Patentansprüche für folgende(n) Vertragsstaat(en) : ES)

1. Verfahren zur Herstellung einer Polyvinylhalogenidformmasse, dadurch gekennzeichnet, daß man 20-98 Gew.-% eines Vinylhalogenids, bezogen auf die Gesamtmenge, in Gegenwart von 2-80 Gew.-% eines Emulsionscopolymerisats in Emulsion oder Suspension polymerisiert, wobei das Emulsionspolymerisat erhältlich ist durch
bᵢ) Emulsionspolymerisation von 1-20 Gew -% eines Monomerengemisches aus
10-99,5 Gew.-% mindestens eines C₁-C₁₈-Alkylacrylats,
0,5-90 Gew.-% mindestens eines konjugierten Diens,
0-10 Gew.-% mindestens eines zwei- oder mehrfach ethylenisch ungesättigten Monomeren mit mindestens einer nicht konjugierten Doppelbindung und
0-10 Gew.-% mindestens eines weiteren Monomeren,
b₂) anschließende Emulsionspolymerisation in Gegenwart des nach Stufe b₁) erhaltenen Emulsionspolymerisats von 25-65 Gew.-% eines Monomerengemisches aus
80-99,9 Gew.-% mindestens einer vinylaromatischen Verbindung,
0,1-10,0 Gew.-% mindestens eines konjugierten Diens oder mindestens eines zwei- oder mehrfach ethylenisch ungesättigten Monomeren mit mindestens einer nicht konjugierten Doppelbindung oder deren
Mischungen und
5 0-10 Gew.-% mindestens eines weiteren Monomeren und
b₃) anschließende Emulsionspolymerisation in Gegenwart des nach Stufe b₂) erhaltenen Emulsionspolymerisats von 15-74 Gew.-% eines Monomerengemischs aus
80-99,9 Gew.-% mindestens eines C₁-C₁₈-Alkylacrylats,
0,1-10,0 Gew.-% mindestens eines konjugierten Diens oder mindestens eines zwei- oder mehrfach ethylenisch ungesättigten Monomeren mit mindestens einer nichtkonjugierten Doppelbindung oder deren Mischungen und
0-10 Gew.-% mindestens eines weiteren Monomeren,
wobei sich die Gewichtsprozente der in den Stufen b₁) bis b₃) eingesetzten Monomerengemische auf das Emulsionscopolymerisat beziehen, sich auf 100 Gew.-% addieren, und der Gesamtanteil an Monomeren mit konjugierten Doppelbindungen im Emulsionscopolymerisat kleiner als 10 Gew.-% ist.

## Claims (Claims for the following Contracting State(s) : BE, FR, NL, DE, GB, IT)

1. A polyvinyl halide molding material containing
A) 20-98% by weight of a polyvinyl halide and
B) 2-80% by weight of an emulsion copolymer obtainable by
b₁) emulsion polymerization of 1-20% by weight of a monomer mixture comprising
10-99.5% by weight of at least one C₁-C₁₈-alkyl acrylate,
0.5-90% by weight of at least one conjugated diene,
0-10% by weight of at least one di- or polyethylenically unsaturated monomer having at least one nonconjugated double bond and
0-10% by weight of at least one further monomer,
b₂) subsequent emulsion polymerization, in the presence of the emulsion polymer obtained in stage bᵢ), of 25-65% by weight of a monomer mixture comprising
80-99.9% by weight of at least one vinylaromatic compound,
0.1-10.0% by weight of at least one conjugated diene or at least one di- or polyethylenically unsaturated monomer having at least one nonconjugated double bond or mixtures thereof and
0-10% by weight of at least one further monomer and
b₃) subsequent emulsion polymerization, in the presence of the emulsion polymer obtained in stage b₂), of 15-74% by weight of a monomer mixture comprising
80-99.9% by weight of at least one C₁-C₁₈-alkyl acrylate,
0.1-10.0% by weight of at least one conjugated diene or at least one di- or polyethylenically unsaturated monomer having at least one nonconjugated double bond or mixtures thereof and
0-10% by weight of at least one further monomer,
the percentages by weight of the monomer mixtures used in stages b₁) to b₃) being based on the emulsion copolymer B) and summing to 100% by weight, and the total amount of monomers having conjugated double bonds in the emulsion copolymer being less than 10% by weight.

2. A process for the preparation of a polyvinyl halide molding material as claimed in claim 1, wherein the monomers of the polyvinyl halide A) are polymerized in emulsion or suspension in the presence of the emulsion copolymer B).

3. A polyvinyl halide molding material as claimed in claim 1, containing
A) 60-98% by weight of the polyvinyl halide and
B) 2-40% by weight of the emulsion copolymer.

4. A polyvinyl halide molding material as claimed in claim 1, wherein the polyvinyl halide is polyvinyl chloride.

5. A molding obtainable from a polyvinyl halide molding material as claimed in claim 1.

## Claims (Claims for the following Contracting State(s) : ES)

1. A process for the preparation of a polyvinyl halide molding material, wherein 20-98% by weight, based on the total amount, of a vinyl halide are polymerized in emulsion or suspension in the presence of
2-80% by weight of an emulsion copolymer, the emulsion polymer being obtainable by
b₁) emulsion polymerization of 1-20% by weight of a monomer mixture comprising
10-99.5% by weight of at least one C₁-C₁ₛ-alkyl acrylate,
0.5-90% by weight of at least one conjugated diene,
0-10% by weight of at least one di- or polyethylenically unsaturated monomer having at least one nonconjugated double bond and
0-10% by weight of at least one further monomer,
b₂) subsequent emulsion polymerization, in the presence of the emulsion polymer obtained in stage b₁), of 25-65% by weight of a monomer mixture comprising
80-99.9% by weight of at least one vinylaromatic compound,
0.1-10.0% by weight of at least one conjugated diene or at least one di- or polyethylenically unsaturated monomer having at least one nonconjugated double bond or mixtures thereof and
0-10% by weight of at least one further monomer and
b₃) subsequent emulsion polymerization, in the presence of the emulsion polymer obtained in stage b₂), of 15-74% by weight of a monomer mixture comprising
80-99.9% by weight of at least one C₁-C₁₈-alkyl acrylate,
0.1-10.0% by weight of at least one conjugated diene or at least one di- or polyethylenically unsaturated monomer having at least one nonconjugated double bond or mixtures thereof and
0-10% by weight of at least one further monomer,
the percentages by weight of the monomer mixtures used in stages b1) to b₃) being based on the emulsion copolymer and summing to 100% by weight, and the total amount of monomers having conjugated double bonds in the emulsion copolymer being less than 10% by weight.

## Revendications (Revendications pour l'(les) Etat(s) contractant(s) suivant(s) : BE, FR, NL, DE, GB, IT)

1. Masse à mouler à base de poly(halogénure de vinyle), contenant
A) 20-98% en poids d'un poly(halogénure de vinyle) et
B) 2-80% en poids d'un produit de copolymérisation en émulsion obtenu par
b₁) polymérisation en émuision de 1 à 20% en poids d'un mélange de monomères composé de
10 à 99,5% en poids d'au moins un acrylate d'alkyle en C₁-C₁₈,
0,5 à 90% en poids d'au moins un diène conjugué,
0 à 10% en poids d'au moins un monomère à deux insaturations éthyléniques ou plus, comportant au moins une douille liaison non conjuguée et
0 à 10% en poids d'au moins un autre monomère,
b₂) polymérisation en émulsion subséquente, en présence du produit de polymérisation en emulsion obtenu dans l'étape bᵢ), de 25 à 65% en poids d'un mélange de monomères composé de
80 à 99,9% en poids d'au moins un composé vinyl-aromatique,
0,1 à 10,0% en poids d'au moins un diène conjugué ou d'au moins un monomère à deux insaturations éthyléniques ou plus, comportant au moins une double liaison non conjuguée, ou de mélanges de ceux-ci et
0 à 10% en poids d'au moins un autre monomère et
b₃) polymérisation en émulsion subséquente, en présence du produit de polymérisation en emulsion obtenu dans l'étape b₂, de 15 à 74% en poids d'un mélange de monomères compose de
80 à 99,9% en poids d'au moins un acrylate d'alkyle en C₁-C₁₈.
0,1 à 10,0% en poids d'au moins un diène conjugué ou d'au moins un monomère à deux insaturations éthyléniques ou plus, comportant au moins une double liaison non conjuguée, ou de mélanges de ceux-ci, et
0 à 10% en poids d'au moins un autre monomère, les pourcentages en poids des mélanges de monomères mis en réaction dans les étapes b₇) à b₃) se rapportant au produit de copolymérisation en émulsion B) et s'additionnant à 100% en poids, et la part totale de monomères à doubles liaisons conjuguées dans le produit de copolymérisation en émulsion étant intérieure à 10% en poids.

2. Procédé de préparation d'une masse à mouler à base de poly(halogénure de vinyle) selon la revendication 1, caractérisé en ce que les monomères du poly(halagénure de vinyle) A) sont polymérisés en émulsion ou en suspension en présence du produit de copolymérisation en émulsion B).

3. Masses à mouler à base de poly(halogénure de vinyle) seion la revendication 1, contenant
A) 60 à 98% en poids du poly(halogénure de vinyle) et
B) 2 à 40% en poids du produit de copolymérisation en émuision.

4. Masses à mouler à base de poly(halogénure de vinyle) selon la revendication 1, dans lesquelles il s'agit, en ce qui concerne le poly(halogénure de vinyle, de poly(chlorure de vinyle).

5. Corps moulés, obtenus à partir de masses à mouler a base de poly(halogénure de vinyle) seion la revendication 1.

## Revendications (Revendications pour l'(les) Etat(s) contractant(s) suivant(s) : ES)

1. Procédé de préparation d'une masse à mouler à base de poly(halogénure de vinyle), caractérisé en ce que l'on polymérise en émulsion ou en suspension
20-98% en poids d'un halogénure de vinyle, par rapport à la quantité totale, en présence de
2-80% en poids d'un produit de copolymérisation en émuision, le produit de polymérisation en émulsion étant obtenu par
b₁) polymérisation en émulsion de 1 à 20% en poids d'un mélange de monomères composé de
10 à 99,5% en poids d'au moins un acrylate d'alkyle en C₁-C₁₈,
0,5 à 90% en poids d'au moins un diène conjugué,
0 à 10% en poids d'au moins un monomère à deux insaturations éthyléniques ou plus, comportant au moins une double liaison non conjuguée et
0 à 10% en poids d'au moins un autre monomère,
b₂) polymérisation en émuision subséquente, en présence du produit de polymérisation en emulsion obtenu dans l'étape b₁), de 25 à 65% en poids d'un mélange de monomères composé de
80 à 99,9% en poids d'au moins un composé vinyl-aromatique,
0,1 à 10,0% en poids d'au moins un diène conjugué ou d'au moins un monomère à deux insaturations éthyléniques ou plus, comportant au moins une double liaison non conjuguée, ou de mélanges de ceux-ci et
0 à 10% en poids d'au moins un autre monomère et
b₃) polymérisation en émulsion subséquente, en présence du produit de polymérisation en emulsion obtenu dans l'étape b₂, de 15 à 74% en poids d'un mélange de monomères composé de
80 à 99,9% en poids d'au moins un acrylate d'alkyle en C₁-C₁₈,
0,1 à 10,0% en poids d'au moins un diène conjugué ou d'au moins un monomère à deux insaturations éthyléniques ou plus, comportant au moins une double liaison non conjuguée, ou de mélanges de ceux-ci, et
0 à 10% en poids d'au moins un autre monomère,
les pourcentages en poids des mélanges de monomères mis en réaction dans les étapes b₁) à b₃) se rapportant au produit de copolymérisation en émulsion et s'aditionnant à 100% en poids, et la part totale de monomères à doubles liaisons conjuguées dans le produit de copolymérisation en émulsion étant inférieure à 10% en poids.
